## Europäisches Patentamt
## European Patent Office
## Office européen des brevets

(19)

(11) Veröffentlichungsnummer: **0 004 055**
**B1**

(12) **EUROPÄISCHE PATENTSCHRIFT**

(21) Anmeldenummer: **79100654.7**

(22) Anmeldetag: **05.03.79**

(51) Int. Cl.³: **F 02 M 27/02, F 23 D 13/18**

(54) Vergasungsbrenner

(30) Priorität: **15.03.78 DE 2811273**

(43) Veröffentlichungstag der Anmeldung:
**19.09.79 Patentblatt 79/19**

(45) Bekanntmachung des Hinweises auf die Patenterteilung:
**29.10.80 Patentblatt 80/22**

(84) Benannte Vertragsstaaten:
**BE CH FR GB IT SE**

(56) Entgegenhaltungen:
**DE - A - 2 103 008**
**DE - A - 2 260 586**
**DE - A - 2 308 753**
**FR - A - 2 277 764**
**FR - A - 2 347 430**
**GB - A - 279 834**

(73) Patentinhaber: **SIEMENS AKTIENGESELLSCHAFT**
**Berlin und München**
**Postfach 22 02 61**
**D - 8000 München 22 (DE)**

(72) Erfinder: **Berg, Hermann Otto**
**Obergasse 2**
**D - 6364 Florstadt (DE)**
**Gulden, Peter**
**Wehneltstrasse 17**
**D - 8520 Erlangen (DE)**
**Kostka, Hana, Dipl.-Ing.**
**Steigbeetstrasse 12**
**D - 8500 Nürnberg (DE)**
**Michel, Alfred, Dr.**
**Oppelner Strasse 3**
**D - 8520 Erlangen (DE)**

Courier Press, Leamington Spa, England.

Vergasungsbrenner

Die Erfindung bezieht sich auf einen Vergasungsbrenner nach dem Oberbegriff des Anspruches 1.

Es ist bereits ein Vergasungsbrenner der im Oberbegriff des Anspruches 1 genannten Art bekannt (DE—B— 22 60 586).

Es ist ferner ein Reaktionsvergaser für Brennkraftmaschinen zur katalytischen Umwandlung von flüssigem in gasförmigen Brennstoff bekannt. Hierbei wird die Abgaswärme des aus der Brennkraftmaschine austretenden Verbrennungsabgases teils zum Aufwärmen und zur Temperaturhaltung der Katalysatoren, teils zum Vorwärmen des Brennstoffes und zu einem weiteren Teil zum Vorwärmen der Frischluft verwendet (DE—A— 23 08 753).

Aufgabe der Erfindung ist es, den Vergasungsbrenner der im Oberbegriff des Anspruches 1 genannten Gattung so auszubilden, daß er kontinuierlich regelbar, besonders ruß- und schadstoffarm mit unter Normalbedingungen flüssigen Brennstoffen betreibbar sowie in vorteilhafter Weise insbesondere als Wärmeerzeuger, beispielsweise als Wärmequelle für Heizungsanlage, verwendbar ist.

Die gestellte Aufgabe wird erfindungsgemäß durch die im kennzeichnenden Teil des Anspruches 1 angegebene Ausbildung gelöst, Zweckmäßige Aus- und Weiterbildungen des Erfindungsgegenstandes sind in den Ansprüchen 2 bis 10 angegeben.

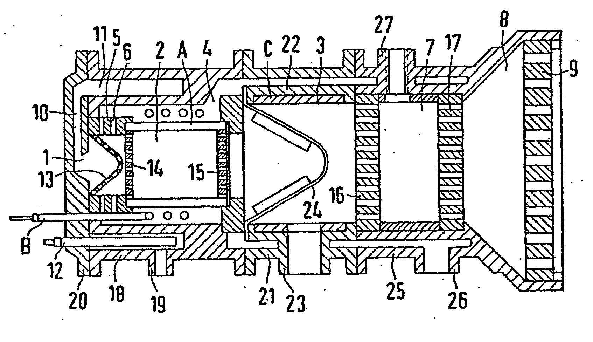

Ein Ausführungsbeispiel des Erfindungsgegenstandes ist in der Zeichnung im Längsschnitt gezeigt.

In der Darstellung ist mit 1 ein Vorraum bezeichnet, in welchem mindestens teilweise verdampfter, unter Normalbedingungen flüssiger Brennstoff mit vorgewärmter Primärluft bei einer Luftzahl $\lambda$ zwischen 0,05 und 0,5, vorzugsweise $\lambda = 0,1 - 0,2$, gemischt wird.

An den Vorraum 1 schließt sich eine Katalysatoreinrichtung 2 an, in welcher das im Vorraum 1 gebildete homogene Dampf-Luftgemisch durh partielle Oxidation an einem Katalysator in ein Brenngas umgewandelt wird. Der nicht dargestellte Katalysator ist in einer katalytisch inaktiven Patrone A aus keramischem Material enthalten, in deren Stirnflächen 14 und 15 eine Vielzahl von Bohrungen zum Durchlaß der Einsatzstoffe und Reaktionsprodukte angebracht ist. Die Katalysatorpatrone A ist so angeordnet, daß sie leicht ausgetauscht werden kann.

An die Katalysatoreinrichtung 2 grenzt ein Mischraum 3 an, in welchem dem aus der Katalysatoreinrichtung 2 austretenden Brenngas Sekundärluft zugemischt wird.

Der Vorraum 1, die Katalysatoreinrichtung 2 und der Mischraum 3 sind konzentrisch von einem Ringraum 4 umgeben, der vom Vorraum 1 durch eine katalytisch inaktive Ringwand 5 getrennt ist. Die Ringwand 5 enthält Radialkanäle 6, durch welche Primärluft, die von einem Teil der Reaktionswärme der Katalysatoreinrichtung 2 und einem Teil der in einer Zündkammer 7 freigesetzten Verbrennungswärme vorgewärmt ist, vom Ringraum 4 in den Vorraum 1 einströmen kann.

An den Mischraum 3 schließt sich die Zündkammer 7 und an die Zündkammer 7 ein sich konisch erweiternder Raum 8 an, der durch eine gelochte Brennerplatte 9 aus porösem Material abgeschlossen ist.

Vor demm Vorraum 1 befindet sich ein Frontraum 10, der in einen Ringkanal 11 übergeht. Der Ringkanal 11 um gibt den Vorraum 1 vollständig und den Ringraum 4 sowie die Katalysatoreinrichtung 2 mindestens auf einem Teil ihrer Länge. Der Ringkanal 11 und der Ringraum 4 enthalten je eine regelbare Wärmequelle 12 bzw. B zum Verdampfen des Brennstoffes bzw. zum Vorwärmen der Primärluft während des Anfahrvorganges und bei Lastwechseln. Im dargestellten Beispiel sind die Wärmequellen 12 und B elektrische Rohrheizkörper. Der als Wärmequelle 12 dienende Rohrheizkörper ist gerade und erstreckt sich in Längsrichtung des Ringkanals 11. Der als Wärmequelle B dienende Rohrheizkörper liegt mit einem gewendelten Teil im Ringraum 4. Sein gerader Anschluß ist parallel zu dem als Wärmequelle 12 dienenden Rohrheizkörper aus dem Brenner herausgeführt.

Der Ringraum 4 umgibt nicht nur den Vorraum 1, die Katalysatoreinrichtung 2 und den Mischraum 3 sondern auch die Zündkammer 7 sowie mindestens teilweise auch den sich konisch erweiternden Raum 8.

Zur homogenen Vermischung des verdampften Primärbrennstoffes und der vorgewärmten Primärluft ist im Vorraum 1 eine katalytisch inaktive Drallblende 13 angebracht, die beispielsweise kegelförmig oder als Scheibe ausgebildet sein kann.

Zwischen dem Mischraum 3 und der Zünkammer 7 ist eine gelochte Scheibe 16 angeordnet, während die Zündkammer 7 vom sich konisch erweiternden Raum 8 durch eine Lochwand 17 getrennt ist.

Die gelochte Scheibe 16 ist unter anderem dazu ausgebildet, die Zündkammer 7 rückschlagfrei vom Mischraum 3 zu trennen. Alle Teile 1 bis 17 dieser Brennereinrichtung sind in einem mehrteiligen Gehäuse angeordnet.

Ein erstes Teil 18 des Gehäuses enthält den Vorraum 1, die Katalysatoreinrichtung 2, einen ersten Abschnitt den Ringraumes 4, die Ringwand 5, den Frontraum 10, den Ringkanal 11, die Wärmequellen 12 und B. die Drallblende 13, die Katalysatorpatrone A mit den Stirnflächen 14 und 15.

Das erste Teil 18 des Gehäuses weist einen radialen Anschlußstutzen 19 für die Zuführung von Brennstoff in den Ringkanal 11 auf. Die Mündung des Anschlußstutzens 19 in den Ringkanal 11 ist im dargestellten Beispiel von der Wärmequelle 12 übergriffen.

Die freie Seite des ersten Teiles 18 des Gehäuses ist von einem Deckel 20 abgeschlossen, der von den Wärmequellen 12 und B durchgriffen ist, also die als Wärmequellen 12 und B dienenden Rohrheizkörper trägt.

Ein Mittelteil 21 des Gehäuses weist einen weiteren Abschnitt des Ringraumes 4 und eine wärmeleitende Wand 22 auf, die den Mischraum 3 vom Ringraum 4 trennt. Ferner weist das Mittelteil 21 des Gehäuses einen radialen Anschlußstutzen 23 für die Zuführung von Sekundärluft in den Mischraum 3 auf. Das Mittelteil 21 des Gehäuses weist eine im Mischraum 3 angeordnete Homogenisierungseinrichtung 24 aus katalytisch inaktivem Material auf und kann mit einer Auskleidung C aus katalytisch inaktivem Material versehen sein.

Ein Endteil 25 des Gehäuses enthält die Zündkammer 7, die gelochte Brennerplatte 9, die gelochte Scheibe 16 und die Lochwand 17 sowie einen Endabschnitt des Ringraumes 4. Ferner weist das Endteil 25 des Gehäuses einen radialen Zuführungsstutzen 26 für die Zuführung von Primärluft in den Ringraum 4 sowie einen weiteren Stutzen 27 für eine nicht dargestellte Zündeinrichtung auf.

Die Teile 18, 21 und 25 des Gehäuses besitzen nicht bezeichnete Flansche für die Verbindung untereinander.

Der Ringraum 4 im ersten Teil 18 des Gehäuses ist im dargestellten Beispiel im Durchmesser kleiner als in den übrigen Gehäuseteilen 21 und 25.

Wirkungsweise: Der Katalysator in der Katalysatorpatrone A wird zum Start durch Wärmeleitung mit Hilfe der regelbaren Wärmequelle B und der damit gleichzeitig vorgewärmten mengengeregelten Primärluft auf die Reaktionsanspringtemperatur vorgeheizt.

Der flüssige Brennstoff wird sodann mengengeregelt durch den Anschlußstutzen 19 in den Ringkanal 11 geleitet und dort anfänglich mit Hilfe der Wärmequelle 12, später unter Ausnutzung eines Teiles der Reaktionswärme der Katalysatoreinrichtung 2 verdampft. Nach Erreichen der Reaktorbetriebstemperatur können die Wärmequellen 12 und B teilweise oder ganz abgeschaltet werden.

Der verdampfte Brennstoff tritt durch den Frontraum 10 in den Vorraum 1 ein und wird dort mit vorgewärmter Primärluft bei einer Luftzahl $0,25 \leq \lambda \leq 0,5$ vorzugsweise bei $\lambda = 0,1 - 0,2$ unter Mitwirkung der Drallblende 13 homogen vermischt. Die Vorwärmtemperatur der Luft wird dabei so geregelt, daß das Brennstoffdampf-Primärluftgemisch sich nicht von selbst entzündet.

Die Primärluft wird über den Zuführstutzen 26, den Ringraum 4 und die Radialkanäle 6 dem Vorraum 1 zugeführt. Auf ihrem Weg nimmt die Primärluft hauptsächlich durch Berührung und Leitung Wärme aus der Zündkammer 7, dem Mischraum 3, der Katalysatoreinrichtung 2 und der Wärmequelle B auf. Sie tritt hinter der katalytisch inaktiven Drallblende 13 in den Vorraum 1 ein und mischt sich dort mit dem verdampften Brennstoff.

Das Dampf-Luftgemisch strömt der Katalysatoreinrichtung 2 zu und wird dort in ein Brenngas umgewandelt.

Das aus der Katalysatoreinrichtung 2 austretende Brenngas wird im Mischraum 3 mit Hilfe der als Drallblende 24 ausgebildeten Homogenisierungseinrichtung nahezu stöchiometrisch beispielsweise bei $\lambda = 1,05$ mit Sekundärluft gemischt. Die Sekundärluft gelangt über den radialen Anschlußstutzen 23 in den Mischraum 3 und kann vergewärmt sein.

Vom Mischraum 3 strömt das Brenngas-Luftgemisch in die Zündkammer 7 und wird dort gezündet.

Das gezündete Gemisch tritt rußfrei und bläubrennend aus der Lochwand 17 in den sich konisch erweiternden Raum 8 ein und heizt die Brennerplatte 9 auf etwa 1200°C auf.

Die abnehmbare Wärme kann über einen geeigneten Wärmetauscher für Heizungszwecke verwendet werden, der wegen des hohen Strahlungsanteils und der Rußfreiheit des Rauchgases relativ klein sein kann.

Durch die homogene Vermischung des erzeugten Brenngases mit einer nahezu stöchiometrischen Luftmenge verbrennt das Gemisch im Vergleich zu einem Zerstäubungsbrenner rußfrei mit extrem niedrigem CO und HC Gehalt. Bei schwefelhaltigem Primärbrennstoff, wie leichtem Heizöl entsteht wegen des fehlenden Luftüberschusses im wesentlichen das unschädliche $SO_2$ anstelle des korrosiven $SO_3$. Die erstrebte leichte und stufenlose Regelbarkeit im weiten Bereich ergibt sich durch die Mengenregelung der Primärluft und des Brennstoffes.

**Patentansprüche**

1. Vergasungsbrenner, mit einem Vorraum (1) zum Mischen eines mindestens teilweise verdampften, flüssigen Brennstoffes mit Primärluft; mit einer sich an den Vorraum (1) anschließenden Katalysatoreinrichtung (2) zum Umwandeln des Dampf-Luftgemisches in ein Brenngas; mit einem an die Katalysatoreinrichtung (2) angrenzenden Mischraum (3) zum Mischen des Brenngases mit Sekundärluft; mit einem den Vorraum (1), die Katalysatoreinrichtung (2) und den Mischraum (3) konzentrisch umgebenden und vom Vorraum (1) durch eine Ringwand (5) getrennten Ringraum (4) sowie mit einem sich konisch erweiternden Raum (8) und einer den sich konisch erweiternden Raum (8) abschließenden gelochten Brennerplatte (9) aus porösem Material, welcher aus dem Mischraum (3) das Brenngas-Luftgemisch zuführbar ist, dadurch gekennzeichnet, daß sich vor dem Vorraum (1) ein Frontraum (10) befindet; daß der Frontraum (10) in einen Ringkanal (11) übergeht, der den Vorraum (1) vollständig und den Ringraum (4) sowie die Katalysatoreinrichtung (2) mindestens auf einem Teil ihrer Länge umgibt; daß der Ringkanal (11) eine Wärmequelle (12) zum Verdampfen des Brennstoffes und der Ringraum (4) eine Wärmequelle (B) zum Vorwärmen der Primärluft während des Anfahrvorganges und zur Unterstützung bei Lastwechseln enthält; daß die Ringwand (5) Radialkanäle (6) besitzt; die den Ringraum (4) mit dem Vorraum (1) verbinden; daß im Vorraum (1) und im Mischraum (3) je eine Homogenisierungseinrichtung angeordnet ist; daß zwischen dem sich konisch erweiternden Raum (8) und dem Mischraum (3) eine Zündkammer (7) angeordnet ist und daß die Zündkammer (7) vom Mischraum (3) rückschlagfrei getrennt ist.

2. Vergasungsbrenner nach Anspruch 1, dadurch gekennzeichnet, daß im Vorraum (1) als Homogenisierungseinrichtung eine kegel- oder schiebenförmige Drallblende (13) angeordnet ist; daß die Katalysatoreinrichtung (2) eine katalytisch inaktive Patrone (A) aufweist, in deren Stirnflächen (14, 15) Durchlaßbohrungen angeordnet sind; daß der Mischraum (3) ald Homogenisierungseinrichtung eine kegel- oder scheibenförmige Drallblende (24) aufweist; daß zwischen dem Mischraum (3) und der Zündkammer (7) eine gelochte Scheibe (16) angeordnet und die Zündkammer (7) vom sich konisch erweiternden Raum (8) durch eine Lochwand (17) getrennt ist.

3. Vergasungsbrenner nach Anspruch 1 und 2, dadurch gekennzeichnet, daß alle Teile der Brennereinrichtung in einem mehrteiligen Gehäuse angeordnet sind, von dem ein erster Teil (18) unter anderem den Frontraum (10), den Vorraum (1), die Drallblende (13), den Ringkanal (11), einen Abschnitt des Ringraumes (4) und die Katalysatoreinrichtung (2) enthält; daß ein Mittelteil (21) den Mischraum (3), die Drallblende (24) einen weiteren Abschnitt des Ringraumes (4) und eine wärmeleitende Wand (22) aufweist; daß ein Endteil (25) die Zündkammer (7) und den sich konisch erweiternden Raum (8) mit der Brennerplatte (9) umschließt sowie einen Endabschnitt des Ringraumes (4) und daß alle Teile des Gehäuses (18, 21, 25) Flansche zur Verbindung mit benachbarten Teilen aufweisen.

4. Vergasungsbrenner nach Anspruch 1 bis 3, dadurch gekennzeichnet, daß das erste Teil (18) des Gehäuses einen Radialen Anschlußstutzen (19) für die Zuführung von Brennstoff in den Ringkanal (11) besitzt.

5. Vergasungsbrenner nach Anspruch 1 bis 4, dadurch gekennzeichnet, daß die Wärmequelle (12) ein elektrischer Rohrheizkörper ist, der sich in Längsrichtung des Ringkanals (11) erstreckt und etwa die Mündung des Anschlußstutzens (19) übergreift.

6. Vergasungsbrenner nach Anspruch 1 bis 5, dadurch gekennzeichnet, daß die Wärmequelle (B) ein gewendelter elektrischer Robrheizkörper ist.

7. Vergasungsbrenner nach Anspruch 1 bis 6, dadurch gekennzeichnet, daß das Mittelteil (21) des Gehäuses einen radialen Anschluß (23) für die Zuführung von Sekundärluft in den Mischraum (3) aufweist.

8. Vergasungsbrenner nach Anspruch 1 bis 7, dadurch gekennzeichnet, daß das Endteil (25) des Gehäuses einen radialen Zuführungsstutzen (26) für die Zuführung von Primärluft in den Ringraum (4) sowie einen weiteren Stutzen (27) für eine Zündeinrichtung aufweist.

9. Vergasungsbrenner nach Anspruch 1 bis 8, dadurch gekennzeichnet, daß sas erste Teil (18) des Gehäuses auf seiner freien Seite durch einen Deckel (20) abgeschlossen ist, der von den Rohrheizkörpern (12) und (B) durchgriffen ist.

10. Vergasungsbrenner nach Anspruch 1 bis 9, dadurch gekennzeichnet, daß der Ringraum (4) im ersten Teil (18) des Gehäuses im Durchmesser kleiner ist als im Mittelteil (21) und im Endteil (25) des Gehäuses.

**Claims**

1. Gas burner having an outer chamber (1) for mixing with primary air a liquid fuel which is at least partially vaporized; having a catalyst device (2) which adjoins the outer chamber (1) for converting the vapour-air mixture into a fuel gas; having a mixing chamber (3) which adjoins the catalyst device (2) for mixing the fuel gas with secondary air; having an annulus (4) which concentrically surrounds the outer chamber (1), the catalyst device (2) and the mixing chamber (3) and which is separated from the outer chamber (1) by means of an annular wall (5), and having a chamber (8) which extends conically and a perforated burner plate (9) which consists of porous material and closes the conically extending chamber (8), to which plate the fuel gas-air mixture can be fed from the mixing chamber (3), characterised in that a front chamber (10) extends into an annular channel (11) which encircles the outer chamber (1) entirely and both the annulus (4) and the catalyst device (2) at least over one part of its length; in that the annular channel (11) contains a source of heat (12) for vaporising the fuel, and the annulus (4) contains a source of heat (B) for preheating the primary air during the starting process and for providing support during changes of load; in that the annular wall (5) possesses radial channels (6) which connect the annulus (4) with the outer chamber (1); in that the outer chamber (1) and the mixing chamber (3) are each provided with a homogenizing device; in that between the conically extending chamber (8) and the mixture chamber (1) there is arranged an ignition chamber (7) and in that the ignition chamber (7) is separated from the mixing chamber (3) in a recoil-free manner.

# 0 004 055

2. Gas burner as claimed in Claim 1, characterised in that a cone- or disc-shaped swirl aperture (13) is arranged in the outer chamber (1) as a homogenizing device (2); in that the catalyst device (2) has a catalytically inactive cartridge (A) in whose end faces (14, 15) are arranged openings; in that the mixing chamber has a cone- or disc-shaped swirl aperture (24) as a homogenizing device; in that a perforated disc (16) is arranged between the mixing chamber (3) and the ignition chamber (7) and the ignition chamber (7) is separated from the chamber (8) which extends conically by means of a perforated wall (17).

3. Gas burner as claimed in Claim 1 and 2, characterised in that all compoents of the combustion device are arranged in a multiple-part housing of which a first part (18) contains inter alia the front chamber (10), the outer chamber (1), the swirl aperture (13), the annular channel (11), a section of the annulus (4) and the catalyst device (2); in that a central part (21) contains the mixing chamber (3), swirl aperture (24) and a further section of the annulus (4) and a heat conductive wall (22); in that an end part (25) comprises the ignition chamber (7) and the conically extending chamber (8) with the burner plate (9) and an end section of the annulus (4) and in that all parts of the housing (18, 21, 25) have flanges for connection to adjacent parts.

4. Gas burner as claimed in Claim 1 to 3, characterised in that the first part (18) of the housing possesses a radial connection stub (19) for feeding fuel into the annular channel (11).

5. Gas burner as claimed in Claim 1 to 4, characterised in that the source of heat (12) is an electric tubular heater which extends in the longitudinal direction of the annular channel (11) and overlaps the opening of the connection stub (19).

6. Gas burner as claimed in Claim 1 to 5, characterised in that the source of heat (B) is a coiled, electric tubular heater.

7. Gas burner as claimed in Claim 1 to 6, characterised in that the central part (21) of the housing has a radial terminal (23) for the supply of secondary air into the mixing chamber (3).

8. Gas burner as claimed in Claim 1 to 7, characterised in that the end part (25) of the housing possesses a radial feeding stub (26) for the supply of primary air into the annulus (4) and a further stub (27) for an ignition device.

9. Gas burner as claimed in Claim 1 to 8, characterised in that the first part (18) of the housing is closed on its free side by means of a cover (20) which is penetrated by the tubular heaters (12) and (B).

10. Gas burner as claimed in Claim 1 to 9, characterised in that the diameter of the annulus (4) is smaller in the first part (18) of the housing than in the central part (21) and in the end part (25) of the housing.

**Revendications**

1. Dispositif pour la combustion par gazéification comportant une chambre d'entrée (1) pour le mélange avec de l'air primaire d'un carburant liquide au moins partiellement vaporisé, un dispositif à catalyse (2) relié à la chambre d'entrée (1) et permettant de convertir le mélange vapeur-air en un gaz combustible, une chambre de mélange (3) reliée au dispositif à catalyse (2) et prévue pour le mélange du gaz combustible avec de l'air secondaire, une chambre annulaire (4) entourant de façon concentrique le dispositif de catalyse (2) et la chambre de mélange (3) et séparée de la chambre d'entrée (1) par une paroi annulair (5), ainsi qu'une chambre (8) s'évasant coniquement et une plaque perforée (9) en matériau poreux, qui ferme l'espace (8) s'élargissant avec une forme conique et à laquelle peut être envoyé le mélange gaz combustible-air à partir de la chambre de mélange (3), caractérisé par le fait qu'en amount de la chambre d'entrée (1) se trouve disposée une chambre frontale (10), que la chambre frontale (10) se prolonge par un canal annulaire (11) qui entoure complètement la chambre d'entrée (1) et entoure sur au moins une partie de leur longeuer la chambre annulaire (4) ainsi que le dispositif à catalyse (2), que le canal annulaire (11) possède une source de chaleur (12) permettant de vaporiser le carburant et que la chambre annulaire (4) comporte une source de chaleur (8) permettant de préchauffer l'air primaire pendant l'opération de démarrage et fournissant une aide dans le cas de modification de la charge, que la paroi annulaire (5) possède des canaux radiaux (6) qui relient la chambre annulaire (4) à la chambre d'entrée (1), que des dispositifs respectifs d'homogénéisation sont disposés dans la chambre d'entrée (1) et dans la chambre de mélange (3), qu'une chambre d'allumage (7) est disposée entre la chambre (8) s'évasant coniquement et la chambre de mélange (3) et que la chambre d'allumage (7) est séparée de la chambre de mélange (3) de manière à empêcher tout retour de flamme.

2. Dispositif suivant la revendication 1, caractérisé par le fait que dans la chambre d'entrée (1) so trouve disposé, en tant que dispositif d'homogénéisation, un écran à tourbillonnement (13) en forme de cône ou de plateau, que le dispositif à catalyse (2) comporte une cartouche (A) inactive du point de vue catalytique et dans les faces frontales (14, 15) de laquelle sont ménagés des perçages traversants, que la chambre de mélange (3) comporte, en tant que dispositif d'homogénéisation, un écran à tourbillonnement (24) en forme de cône ou de plateau, qu'un disque perforé (16) est disposé entre la chambre de mélange (3) et la chambre d'allumage (7) et que la chambre d'allumage (7) est séparée de la chambre (8) s'évasant coniquement, par une paroi perforée (17).

3. Dispositif suivant les revendications 1 et 2, caractérisé par le fait que toutes les parties du dispositif de combustion sont disposées dans un boîtier en plusieurs parties, dont une première partie (18) contient notamment la chambre frontale (10), la chambre d'entrée (1), l'écran à tourbillonnement (13), le canal annulaire (11), une partie de la chambre annulaire (4) et le dispositif à catalyse (2), qu'une partie médiane (21) contient la chambre de mélange (3), l'écran à tourbillonnement (24), une autre partie de la chambre annulaire (4) et une paroi (22) conduisant la chaleur, qu'une partie d'extrémité (25) englobe la chambre d'allumage (7) et l'espace (8) s'évasant coniquement et comportant la plaque (9), ainsi qu'une section d'extrémité de la chambre annulaire (4), et que toutes les parties du boîtier (18, 21, 25) comportent des brides de liaison à des parties voisines.

4. Dispositif suivant les revendications 1 à 3, caractérisé par le fait que la première partie (18) du boîtier possède un embout radial de raccordement (19) pour l'envoi de carburant dans le canal annulaire (11).

5. Dispositif suivant les revendications 1 à 4, caractérisé par le fait que la source de chaleur (12) est un corps de chauffage électrique tubulaire qui s'étend suivant la direction longitudinale du canal annulaire (11) et s'étend sensiblement au-dessus du débouché de l'embout de raccordement (19).

6. Dispositif suivant les revendications 1 à 5, caractérisé par le fait que la source de chaleur (B) est un corps de chauffage tubulaire électrique de forme hélicoîdale.

7. Dispositif suivant les revendications 1 à 6, caractérisé par le fait que la partie médiane (21) du boîtier possède un embout radial (23) pour l'envoi d'air secondaire dans la chambre de mélange (3).

8. Dispositif suivant les revendications 1 à 7, caractérisé par le fait que la partie d'extrémité (25) du boîtier comporte un embout radial (26) pour l'envoi d'air primaire dans la chambre annulaire (4) ainsi qu'un embout (27) pour un dispositif d'allumage.

9. Dispositif suivant les revendications 1 à 8, caractérisé par le fait que la première partie (18) du boîtier est fermée sur sa face libre par un couvercle (20) qui est traversé par les corps de chauffage tubulaires (12) et (B).

10. Dispositif suivant les revendications 1 à 9, caractérisé par le fait que la chambre annulaire (4) possède, dans la première partie (18) du boîtier, un diamètre plus petit que dans la partie médiane (21) et dans la partie d'extrémité (25) du boîtier.